# EUROPÄISCHE PATENTSCHRIFT

(11) **EP 2 153 701 B1**
(45) Veröffentlichungstag und Bekanntmachung des Hinweises auf die Patenterteilung: **27.04.2011**
(21) Anmeldenummer: 07729933.7
(22) Anmeldetag: 06.06.2007
(51) Int. Cl.: H05B 41/04, H05B 41/288

(54) **HOCHDRUCKENTLADUNGSLAMPE MIT VERBESSERTER ZÜNDFÄHIGKEIT SOWIE ZÜNDVORRICHTUNG FÜR EINE GASENTLADUNGSLAMPE**
HIGH-PRESSURE DISCHARGE LAMP WITH IMPROVED IGNITION QUALITY AND IGNITION DEVICE FOR A GAS DISCHARGE LAMP
LAMPE À DÉCHARGE HAUTE PRESSION À CAPACITÉ D'AMORÇAGE AMÉLIORÉE ET DISPOSITIF D'AMORÇAGE POUR UNE LAMPE À DÉCHARGE

(43) Veröffentlichungstag der Anmeldung: 17.02.2010
(73) Patentinhaber: OSRAM Gesellschaft mit beschränkter Haftung, 81543 München (DE)
(72) Erfinder: KLOSS, Andreas, 85579 Neubiberg (DE); WALTER, Steffen, 85667 Oberpframmern (DE); SCHALK, Bernhard, 82008 Unterhaching (DE)
(86) Internationale Anmeldenummer: PCT/EP2007/055558
(87) Internationale Veröffentlichungsnummer: WO 2008/148424

(56) Entgegenhaltungen:
- US-A- 4 325 004
- US-A- 4 353 012
- US-A- 4 724 362

## Beschreibung

### Technisches Gebiet

Die Erfindung geht aus von einer Zündvorrichtung gemäß dem Oberbegriff des Anspruchs 1 sowie einer Hochdruckentladungslampe gemäß Anspruch 11. Derartige Lampen sind insbesondere Hochdruckentladungslampen für Allgemeinbeleuchtung oder für fotooptische Zwecke. Die Erfindung betrifft weiterhin eine Zündvorrichtung mit einem verbesserten Betriebsverfahren, die insbesondere für solch eine Lampe eingesetzt werden kann.

### Stand der Technik

Das Problem der Zündung von Hochdruckentladungslampen wird derzeit dadurch gelöst, dass das Zündgerät in das Vorschaltgerät integriert ist. Nachteilig daran ist, dass die Zuleitungen hochspannungsfest ausgelegt sein müssen.

In der Vergangenheit hat es immer wieder Versuche gegeben, die Zündeinheit in die Lampe zu integrieren. Hauptsächlich wurde versucht, sie in den Sockel zu integrieren. Eine besonders effektive und hohe Pulse versprechende Zündung gelingt mittels sog. Spiral-Puls-Generatoren, wie sie z.B. in US-A 3 289 015 offenbart sind. Vor längerer Zeit wurden derartige Geräte bei verschiedenen Hochdruckentladungslampen wie Metallhalogenidlampen oder Natriumhochdrucklampen vorgeschlagen, siehe beispielsweise US-A 4 325 004 und US-A 4 353 012. Sie konnten sich jedoch nicht durchsetzen, weil sie einerseits zu teuer sind. Zum andern ist der Vorteil, sie in den Sockel einzubauen, nicht ausreichend, da das Problem des Zuführens der Hochspannung in den Kolben bleibt. Daher steigt die Wahrscheinlichkeit für Schädigungen der Lampe, seien es Isolationsprobleme oder ein Durchbruch im Sockel stark an. Bisher übliche Zündgeräte konnten im allgemeinen nicht über 100°C-150°C erwärmt werden. Die erzeugte Spannung musste dann der Lampe zugeführt werden, was Leitungen und Lampenfassungen mit entsprechender Hochspannungsfestigkeit erfordert, typisch sind etwa 5 kV oder mehr.

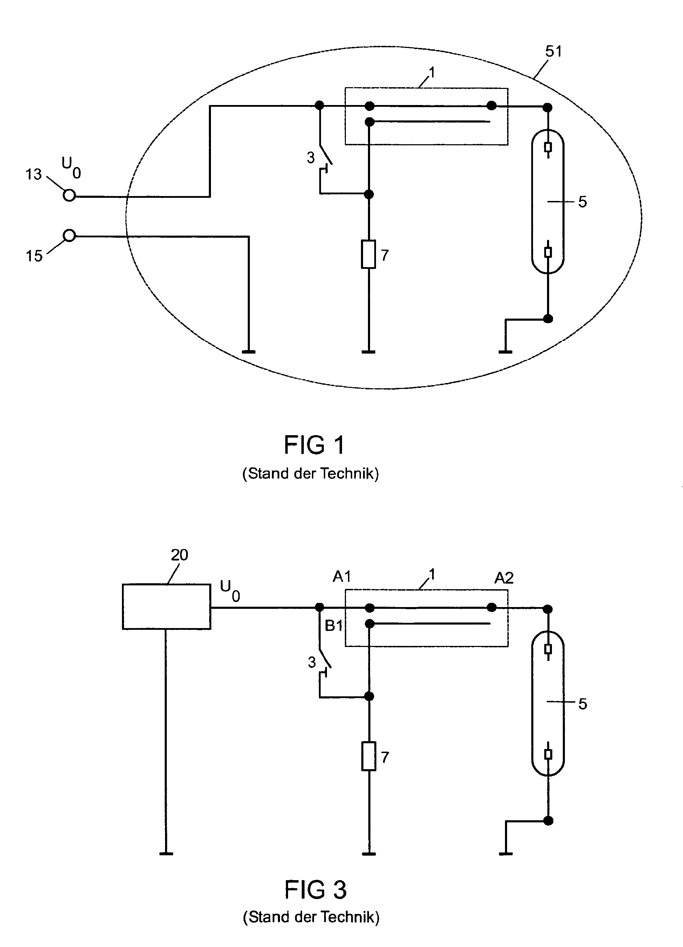

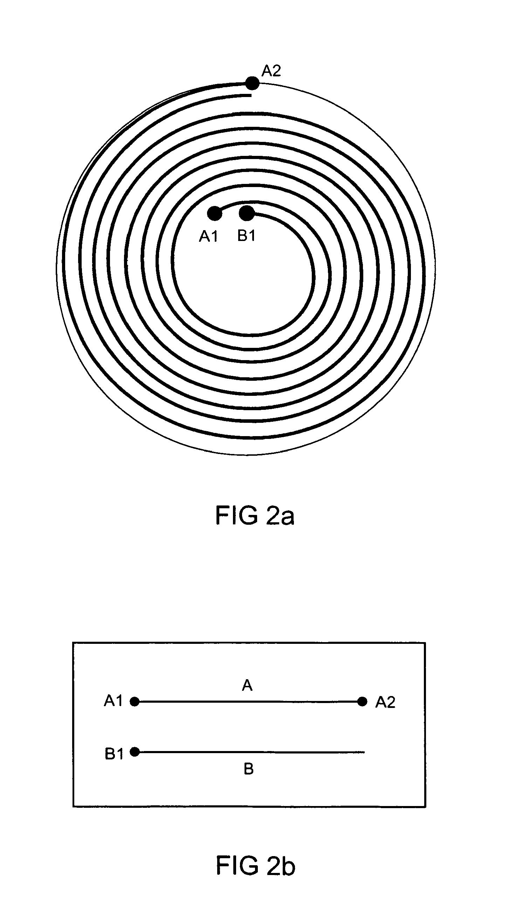

Im folgenden soll die Funktionsweise eines Spiral-Puls-Generators kurz anhand der Figuren 1-3 erläutert werden. Ein Spiral-Puls-Generator besteht aus einer Wicklung zweier leitender Schichten, zwischen denen ein Isolationsmaterial zu liegen kommt. Das Isolationsmaterial kann ein Material mit hoher Dielektrizitätskonstante oder ein Material mit hoher Permeabilität oder eine Mischung aus beiden Materialien sein. Fig. 2a zeigt die Darstellung eines schematischen Aufbaus eines Spiral-Puls-Generators. Die leitende Schicht A ist an den Endpunkten A1 und A2 kontaktiert. Die parallel verlaufende Schicht B ist lediglich an einem Endpunkt B1 kontaktiert. Der Anschluss A1 liegt an der Spannung U₀, wie sie das elektronische Betriebsgerät zur Verfügung stellt. Der Anschluss A2 ist der Ausgang und an die Gasentladungslampe angeschlossen. Der Anschluss B1 der leitenden Schicht B ist über einen Ladewiderstand 7 mit dem Masseanschluss verbunden. Die beiden leitenden Schichten mit dem dazwischenliegenden Dielektrikum bilden einen Kondensator, der über die Anschlüsse A1 und B1 auf die Leerlaufspannung U₀ geladen wird. Die Anschlüsse A1 und B1 sind mit einem schnellen Schalter 3, wie z.B. eine Funkenstrecke verbunden. Der Schalter schaltet bei einer bestimmten Schwellenspannung, die etwas unterhalb von U₀ liegt. Nach dem schließen des Schalters bildet sich ein Spannungspuls am Spiral-Puls-Generator aus, der vom Punkt des Schalters aus wie eine Welle den Spiral-Puls-Generator entlang bis zum Punkt A2 läuft, dort reflektiert wird und wieder zurückläuft. Dabei baut sich im Punkt A2 eine Spannung UA auf, die durch 2 x n x U₀ x η ausgedrückt werden kann. η ist dabei die Effizienz des Spiral-Puls-Generators. Nach der Zündung der Lampe wird der Lampenstrom durch die leitende Schicht A geführt um die Lampe zu betreiben.

Der jetzt verwendete Spiral-Puls-Generator ist insbesondere ein sog. LTCC-Bauteil. Dieses Material ist eine spezielle Keramik, die bis 500°C oder 600 °C Temperaturfest gemacht werden kann. Zwar wurde LTCC schon in Zusammenhang mit Lampen verwendet, siehe US 2003/0001519 und US-B 6 853 151. Jedoch wurde es für ganz andere Zwecke bei praktisch kaum temperaturbelasteten Lampen, mit typischen Temperaturen unter 100 °C, eingesetzt. Der besondere Wert der hohen Temperaturstabilität von LTCC in Zusammenhang mit der Zündung von Hochdruckentladungslampen, wie vor allem Metallhalogenidlampen mit Zündproblemen, wurde bisher nicht erkannt.

Zur Erzeugung besonders hoher Spannungen wird bisher ein Doppel-Generator verwendet, siehe US-A 4 608 521. Dieses Verfahren hat jedoch den Nachteil, dass es lediglich bei zweiseitig gesockelten Lampen Anwendung finden kann, da an beiden Elektroden eine sehr hohe Spannung anliegt.

### Aufgabe

Die Aufgabe der vorliegenden Erfindung ist es, eine Zündvorrichtung anzugeben, die derart ausgestaltet ist, dass sie temperaturfest ist, hohe Spannungen über 15 kV erzeugen kann, gleichzeitig kompakter gebaut werden kann und so in eine Hochdruckentladungslampe eingebaut werden kann. Diese Aufgabe wird durch die Merkmale des Anspruchs 1 gelöst.

Weiterhin ist es Aufgabe der vorliegenden Erfindung, eine Hochdruckentladungslampe bereitzustellen, die mit einem weiterentwickelten Verfahren angesteuert wird so dass die Hochdruckentladungslampe auch einseitig gesockelt werden kann und deren Zündverhalten gegenüber bisherigen Lampen deutlich verbessert ist, und bei der keine Schädigung infolge einer Einleitung der Hochspannung in den Außenkolben der Lampe zu befürchten ist. Dies gilt insbesondere für Metallhalogenidlampen, wobei das Material des Entladungsgefäßes entweder Quarzglas oder Keramik sein kann. Diese Aufgabe wird gelöst durch die kennzeichnenden Merkmale des Anspruchs 11.

Besonders vorteilhafte Ausgestaltungen finden sich in den abhängigen Ansprüchen.

Erfindungsgemäß wird jetzt ein Hochspannungspuls mit mindestens 15 kV, der zur Zündung beispielsweise einer Lampe verwendet werden kann, mittels eines Aufbaus mit speziellen temperaturresistenten Spiral-Puls-Generatoren erzeugt, der in unmittelbarer Nähe des Entladungsgefäßes im Außenkolben integriert wird. Nicht nur eine Kaltzündung sondern auch ein Heißwiederzündung ist damit möglich.

### Darstellung der Erfindung

Bisher wird zur Zündung von Gasentladungslampen mit Spiral-Puls-Generatoren aus einer Ladespannung U₀ eine Zündspannung erzeugt. Die Zündspannung U_{A} ist als Funktion der Ladespannung U₀ gegeben durch U_{A} = 2 x n x U₀ x η, wobei die Effizienz η durch η = 1-1,16*(AD-ID)/AD gegeben ist. AD ist der Außendurchmesser des Spiral-Puls-Generators, ID ist sein Innendurchmesser. Die maximale Größe der Ladespannung ist bei einer Verschaltung nach dem Stand der Technik durch den Maximalwert der Leerlaufspannung des Betriebsgerätes gegeben. Dieser liegt üblicherweise bei etwa 400V. Da die Ladespannung direkt in die Ausgangsgröße, also die Zündspannung eingeht, kann durch Erhöhung der Ladespannung der Maximalwert der Zündspannung erheblich gesteigert werden.

Es wird daher vorgeschlagen, eine weitere Spannung bereit zu stellen, mittels derer eine höhere Ladespannung am Spiral-Puls-Generator angelegt werden kann. Dies kann mittels einer erhöhten Ladespannung erfolgen. Es ist aber auch möglich, eine negative Spannung zu verwenden, die zusammen mit der positiven Leerlaufspannung die Ladespannung ergibt.

Kurze Beschreibung der Zeichnung(en)
- Fig. 1: Prinzipieller Aufbau einer Gasentladungslam- pe enthaltend eine Zündungsanordnung mit ei- nem Spiral-Puls-Generator im Außenkolben nach dem Stand der Technik.
- Fig. 2a: Prinzipieller Aufbau eines Spiral-Puls- Generators.
- Fig.: 2b Vereinfachte Darstellung eines Spiral-Puls- Generators.
- Fig. 3: Schaltung eines Lampensystems mit einem Spi- ral-Puls-Generator nach dem Stand der Tech- nik.
- Fig. 4: Prinzipieller Aufbau einer ersten Ausfüh- rungsform des erfindungsgemäßen Lampensys- tems enthaltend eine Zündungsanordnung mit einem Spiral-Puls-Generator, der eine eigene Ladespannung besitzt.
- Fig. 5: Schaltbild einer i-Stufigen Villardkaskade.
- Fig. 6: Prinzipieller Aufbau einer zweiten Ausfüh- rungsform des erfindungsgemäßen Lampensys- tems enthaltend eine Zündungsanordnung mit einem Spiral-Puls-Generator, der über eine Villard-Kaskade geladen wird.
- Fig. 7: Prinzipieller Aufbau einer dritten Ausfüh- rungsform des erfindungsgemäßen Lampensys- tems enthaltend eine Zündungsanordnung mit einem Spiral-Puls-Generator, der über einen vorgeschalteten Spiral-Puls-Generator gela- den wird.
- Fig. 8: Beispiele für die Ausgangsspannung U_{A} eines Spiral-Puls-Generators ohne Vorspannung (Signal 81) und mit -U₀ als Vorspannung (Signal 83).
- Fig. 9: Frequenzabhängigkeit der Verstärkung einer 6-stufigen Diodenkaskade mit Kondensatoren, die eine Kapazität von 22nF aufweisen, bei einer Belastung von 1MΩ.
- Fig. 10: Beispielaufbau einer 3-stufigen Diodenkaska- de in LTCC-Bauweise.
- Fig. 11: Aufbau eines doppelten Spiral-Puls- Generators nach der dritten Ausführungsform.

### Bevorzugte Ausführung der Erfindung

Erfindungsgemäß wird der Spiral-Puls-Generator, der die Gasentladungslampe mit einer Zündspannung versorgt nicht mit der Leerlaufspannung (13-15) des Betriebsgerätes geladen, sondern mit einer höheren Spannung, die auf verschiedene Weisen erzeugt werden kann. Die Funktionsweise entspricht ansonsten der Funktionsweise des Spiral-Puls-Generators nach dem Stand der Technik, jedoch können durch die erhöhte Ladespannung erheblich höhere Zündspannungen für die Entladungslampe bereitgestellt werden.

### Erste Ausführungsform

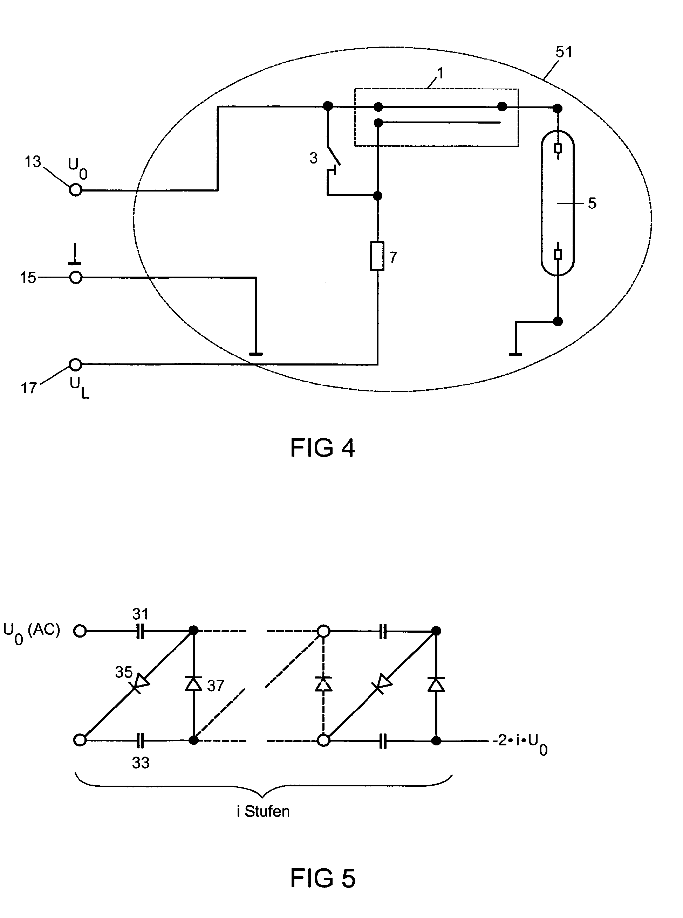

In der ersten Ausführungsform wird, wie in Fig. 4 zu sehen, neben der bekannten Leerlaufspannung noch eine zweite Ladespannung 17 vom Betriebsgerät generiert und dem Zündgerät mit dem erfindungsgemäßen Spiral-Puls-Generator zugeführt. Die Ladespannung U_{L} (17) hat vorzugsweise ein umgekehrtes Vorzeichen gegenüber der Leerlaufspannung U₀ (13). Die an den Spiral-Puls-Generator angelegte Spannung errechnet sich damit zu U₀-U_{L}, und ist beim erfindungsgemäßen Verfahren damit um den Betrag von U_{L} höher als die Ladespannung nach dem Stand der Technik. Fig. 4 zeigt eine erfindungsgemäße Gasentladungslampe, bei der der Brenner 5, der Spiral-Puls-Generator 1 mit seiner Beschaltung im Außenkolben 51 der Gasentladungslampe untergebracht sind. Bei dieser Ausführungsform müssen zwar drei Spannungspotentiale in die Lampe geführt werden, jedoch bewegen sich alle drei Potentiale auf vergleichsweise niedrigem Spannungsniveau, so dass die Durchführungen in den Lampenkolben wenig belastet werden.

### Zweite Ausführungsform

Soll die Gasentladungslampe weiterhin mit zwei Stromzuführungen hergestellt werden, so kann die erhöhte Ladespannung aus der Leerlaufspannung des Betriebsgerätes generiert werden. Je nachdem, ob die Leerlaufspannung des Betriebsgerätes eine Gleichspannung oder eine Wechselspannung ist kommen verschiedene Verfahren in Betracht.

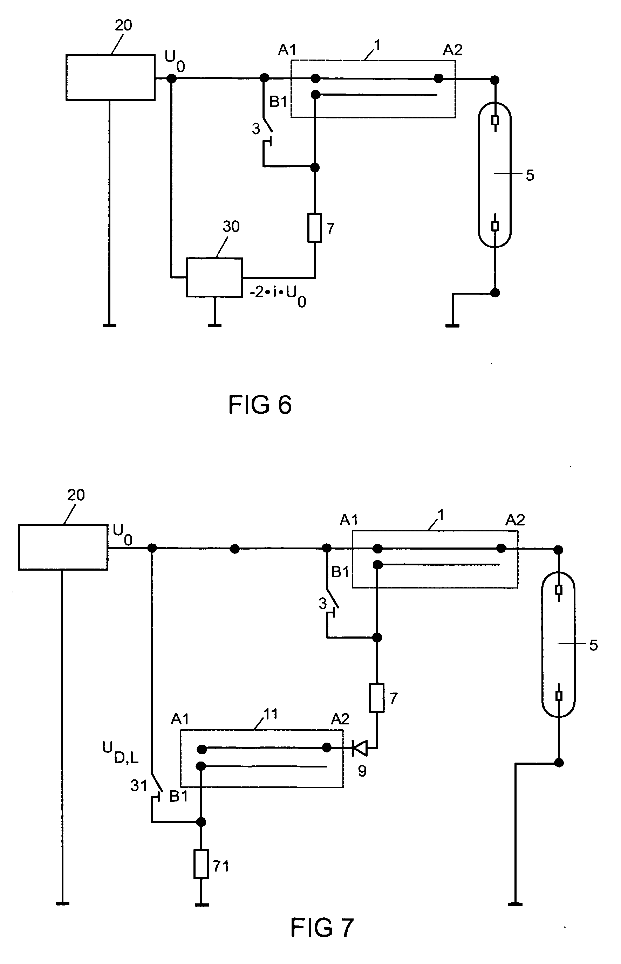

Die zweite Ausführungsform bezieht sich auf eine Ausführungsform, bei der eine Wechselspannung als Leerlaufspannung vom Betriebsgerät zur Verfügung gestellt wird. Fig. 5 zeigt das Schaltbild einer Spannungsvervielfacherschaltung. Diese Schaltung wird auch als Villard-Kaskade oder als Cockcroft-Walton-Generator bezeichnet. Eine Stufe der Kaskadenschaltung besteht jeweils aus zwei Kondensatoren 31 und 33 und zwei Dioden 35 und 37, die jeweils in der bekannten Art verschaltet werden. Pro Stufe verdoppelt diese Kaskadenschaltung die Spannung. Die Ausgangsspannung ergibt sich somit zu: U_{v =} 2*i*U₀. Nach der Zündung der Lampe liegt an der Kaskadenschaltung die Lampenspannung an, die in der Regel deutlich kleiner als die Leerlaufspannung des Betriebsgerätes ausfällt. Damit bleibt die Ausgangsspannung Uᵥ unter der Schwellspannung des Schaltelementes 3, so dass die Zündschaltung nach Durchzünden der Lampe außer Betrieb gesetzt ist. Fig. 6 zeigt ein Blockschaltbild der zweiten Ausführungsform, bei der die Eingangsspannung U₀ auch als Eingangsspannung der Villard-Kaskade 30 herangezogen wird. Der Ausgang der Kaskade ist über einen Ladewiderstand 7 an den Spiral-Puls-Generator angeschlossen. Bei entsprechender Dimensionierung der Kaskade ist der Ladewiderstand allerdings entbehrlich. Einzige Vorraussetzung für die Funktion der Schaltung ist eine Wechselspannung als Eingangsspannung U₀.

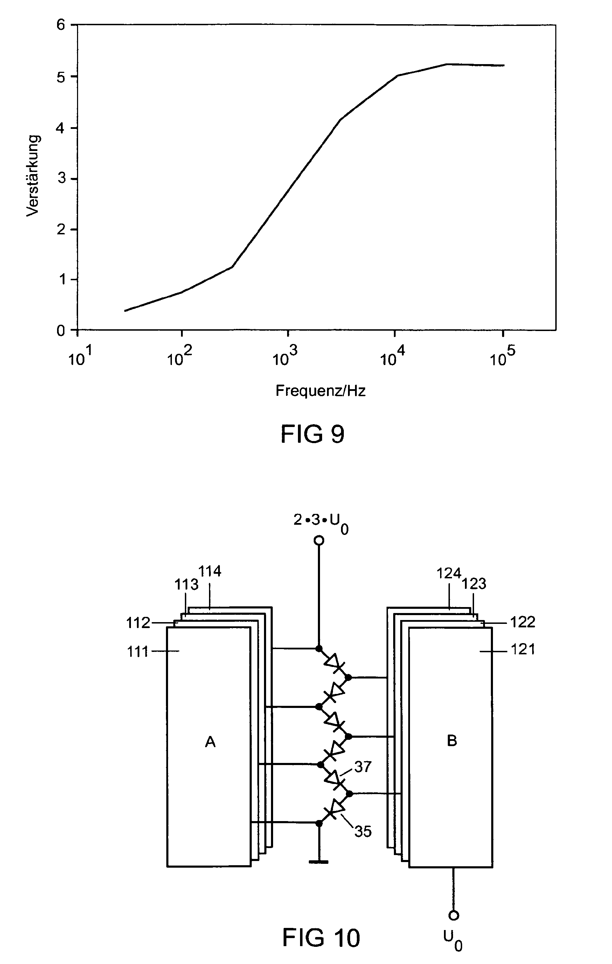

Da die Zündvorrichtung bevorzugt in den Außenkolben der Gasentladungslampe eingebaut wird, ist es notwendig, auch diese entsprechend temperaturfest auszuführen. Dies wird durch temperaturfeste Materialien und Verbindungen erreicht. Als Dioden für die Kaskade werden SiC-Dioden verwendet, die eine Sperrschichttemperatur bis zu 600°C erlauben. Die Kondensatoren werden wie der Spiral-Puls-Generator in einer LTCC- Bauweise ausgeführt, das sie bis 800°C temperaturfest macht. Da für eine schnelle und sichere Zündung entsprechend hohe Kapazitäten benötigt werden, wird ein Dielektrikum mit hoher Dielektrizitätskonstante verwendet. Hier kann z.B. BaTiO₃ verwendet werden. Das BaTiO₃ wird mit entsprechenden Sinterzusätzen versehen, und dann mit bekanntem LTCC-Verfahren verarbeitet. Dabei wird ein bevorzugt ein Doppelstack, wie in Fig. 10 dargestellt, aufgebaut. Das dielektrische Material befindet sich zwischen den leitenden Schichten 111, 112, 113 und 114 des Stacks A und den leitenden Schichten 121, 122, 123 und 124 des Stacks B. Zwischen den Schichten entsteht so jeweils ein Kondensator, also drei Kondensatoren pro Stack. Zwischen den Stacks können die SiC-Dioden angeordnet werden, die bevorzugt als Die direkt auf das Substrat aufgebracht werden und über Vias mit den entsprechenden leitenden Schichten verbunden werden. In Fig. 10 ist die schematische Beschaltung des Stacks mit den SiC-Dioden gezeigt. Die Verbindung mit Vias ist Stand der Technik bei LTCC-Bauteilen, und wird daher nicht näher erläutert. Die SiC-Dioden können mit allen beim LTCC-Verfahren bekannten und für diese Temperatur geeigneten Verbindungsverfahren mit den LTCC-Kondensatoren verbunden werden. In bevorzugter Weise werden die SiC-Dioden per Bonding mit den LTCC-Kondensatoren verbunden. Für die Verschaltung werden aus den leitenden Schichten Kontaktfahnen herausgeführt. In die Kontaktfahnen können die Vias eingearbeitet werden, die auf der Bestückungsseite korrespondierende Kontaktflächen besitzen, auf die dann die Bondingverbindungen der SiC-Dioden aufgebracht werden. Die SiC-Dioden können natürlich auch mit geeignetem Hochtemperaturlot oder mittels Schweißverbindungen kontaktiert werden.

Die Villardkaskade ist natürlich nicht auf drei Stufen beschränkt. Je nach Hochdruckentladungslampe und nach Auslegung des Spiral-Puls-Generators kann die Villard-Kaskade aus 1-10 Stufen bestehen.

### Dritte Ausführungsform

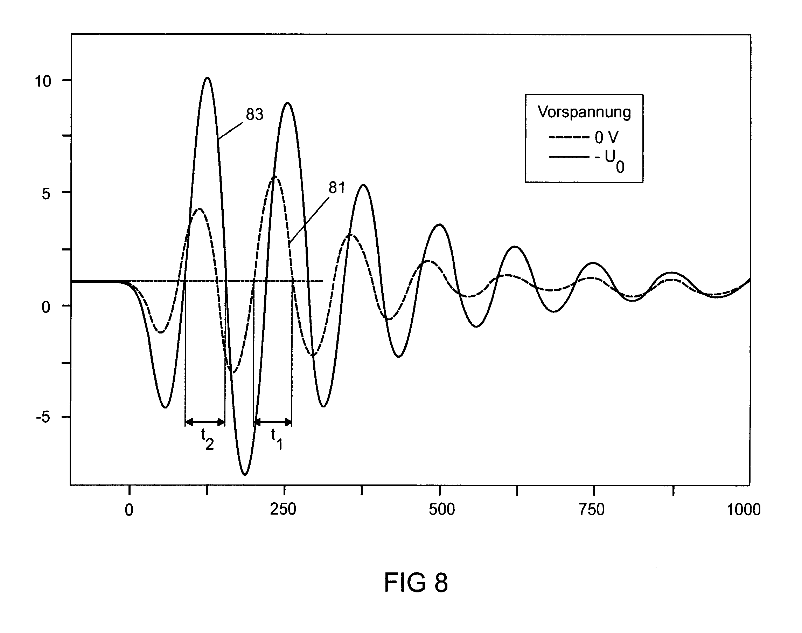

In der dritten Ausführungsform ist die Art der Leerlaufspannung für die Funktion des Zündmechanismus unwesentlich. Gleichzeitig können sehr hohe Zündspannungen realisiert werden, die eine Heißwiederzündung der Lampe problemlos möglich machen. In der dritten Ausführungsform werden, wie in Fig. 7 dargestellt, zwei Spiral-Puls-Generatoren hintereinander geschaltet. Der erste Spiral-Puls-Generator 11 wird in an sich bekannter Weise von der Leerlaufspannung U₀ des Betriebsgerätes gespeist. Das Schaltelement 31, vorzugsweise eine Funkenstrecke, ist so dimensioniert, dass die Schwellenspannung knapp unter der Leerlaufspannung U₀ liegt. Damit erzeugt der erste Spiral-Puls-Generator eine Ausgangsspannung von: U_{SPG1} =2 x n₁ x U₀ x η₁. Die Ausgangsspannungspulse werden über eine Diodenstrecke 9 beliebiger Polung und einen Ladewiderstand 7 auf den Eingang des zweiten Spiral-Puls-Generators 1 gegeben. Dadurch lädt sich der zweite Spiral-Puls-Generator 1 langsam über eine Vielzahl von Pulsen des ersten Spiral-Puls-Generators auf den Scheitelwert der Ausgangsspannung U_{SPG1} des ersten Spiral-Puls-Generators 11 auf. Damit dies funktioniert, muss die Diode 9 in der Lage sein, die kurzen Pulse des ersten Spiral-Puls-Generators durch zu schalten, und den negativen Teil des Pulses genügend schnell zu sperren, was entsprechende Anforderungen an die Schaltgeschwindigkeit der Diode 9 stellt. Die Ausgangspulsform eines Spiral-Puls-Generators ist z.B. in Fig. 8 dargestellt. Das Signal 83 ist die Ausgangsspannung eines Spiral-Puls-Generators mit einer Vorspannung U₀, das Signal 81 ist die Ausgangsspannung ohne Vorspannung, d.h. die Vorspannung beträgt 0V. Die Zeitachse ist in ns aufgetragen, die Einheit der Höhenachse beträgt kV. Es ist gut zu erkennen, dass Zündspannungen von etwa 10kV bei einer Basispulsbreite t₂ des zweiten Spiral-Puls-Generators von etwa 100ns möglich sind. Durch die Basispulsbreite t₁ des ersten Spiral-Puls-Generators ist eine Diode notwendig, deren Sperrverzugszeit kleiner ist als die halbe Basispulsbreite t₁. Damit wird durch die Folge gegenpoliger Pulse aus dem ersten Spiral-Puls-Generator der zweite Spiral-Puls-Generator aufgeladen und nur teilweise wieder entladen. Um die Entladung geringer zu halten, wird vorzugsweise eine Diode verwendet, deren Sperrverzugszeit kleiner ist als ein Viertel der Basispulsbreite t₁. Der zweite Schwellwertschalter 3 ist so ausgelegt, dass er bei einer Spannung leicht unterhalb dem Scheitelwert der Ausgangsspannung U_{SPG1} des ersten Spiral-Puls-Generators einschaltet. Die Ausgangsspannung wird hinter dem Ladewiderstand 7 und der schnellen Diode 9 gemessen, so dass die Spannungen an diesen Teilen auch beinhaltet sind. Auch der zweite Schwellwertschalter ist vorzugsweise eine Funkenstrecke. Die Ausgangsspannung, d.h. die Zündspannung ergibt sich somit zu: U_{SPG2} = U_{z} = 2 x n₁ x U₀ x η₁ x 2 x n₂ x η₂, wobei n₁ die Windungszahl des ersten Spiral-Puls-Generators ist, n₂ die Windungszahl des zweiten Spiral-Puls-Generators ist, η₁ die Effizienz des ersten Spiral-Puls-Generators ist und η₂ die Effizienz des zweiten Spiral-Puls-Generators ist.

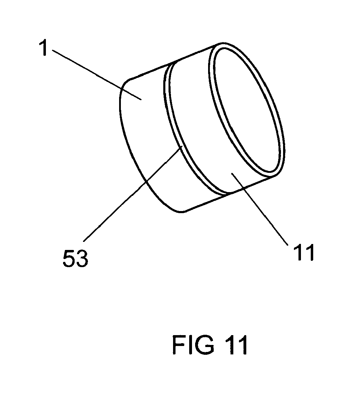

In Fig. 11 ist eine bevorzugte Ausführungsform dargestellt, bei der beide Spiral-Puls-Generatoren in einem Bauteil integriert sind. Dies wird dadurch erreicht, dass die Spiral-Puls-Generatoren 1 und 11 gemeinsam gewickelt werden, und zwischen den Folien eine geeignete Isolation 53 mitgewickelt und gesintert wird. Dadurch entstehen sozusagen zwei Spiral-Puls-Generatoren nebeneinander, die günstige Vorraussetzungen für eine kompakte Verschaltung bieten.

## Patentansprüche

1. Zündvorrichtung mit einem ersten Spiral-Puls-Generator (1) und einem ersten Schwellwertschalter (3), die in einem Außenkolben oder im Sockel einer Gasentladungslampe angeordnet sind, **dadurch gekennzeichnet, dass** die vor der Zündung an der Lampe anliegende Spannung (U₀) entweder durch eine Spannungsvervielfacherkaskade (30) oder durch einen zweiten Spiral-Puls-Generator (11) mit einem zweiten Schwellwertschalter (31) erhöht wird, um die erhöhte Spannung zur Generierung einer Zündspannung dann an den ersten Spiral-Puls-Generator (1) anzulegen.

2. Zündvorrichtung nach Anspruch 1, **dadurch gekennzeichnet, dass** die Spannungsvervielfacherkaskade (30) aus hochtemperaturstabilen Bauteilen besteht.

3. Zündvorrichtung nach Anspruch 2, **dadurch gekennzeichnet, dass** die Spannungsvervielfacherkaskade (30) aus SiC-Dioden und Kondensatoren in LTCC-Bauweise besteht.

4. Zündvorrichtung nach Anspruch 3, **dadurch gekennzeichnet, dass** die Kondensatoren aus einem oder zwei LTCC-Stacks aufgebaut sind.

5. Zündvorrichtung nach Anspruch 4, **dadurch gekennzeichnet, dass** die SiC-Dioden auf den LTCC-Stack oder den LTCC-Stacks aufgebracht und mittels LTCC-Leiterbahnen mit den Kondensatoren verbunden sind.

6. Zündvorrichtung nach Anspruch 1, **dadurch gekennzeichnet, dass** zwischen dem ersten Spiral-Puls-Generator (1) und dem zweiten Spiral-Puls-Generator (11) eine Diode in beliebiger Polung geschaltet ist, wobei die Sperrzeit der Diode kleiner ist als die halbe Pulsbreite (t₁) eines Pulses des ersten Spiral-Puls-Generators.

7. Zündvorrichtung nach Anspruch 1, **dadurch gekennzeichnet, dass** zwischen dem ersten Spiral-Puls-Generator (1) und dem zweiten Spiral-Puls-Generator (11) eine Diode in beliebiger Polung geschaltet ist, wobei die Sperrzeit der Diode kleiner ist als ein viertel der Pulsbreite (t₁) eines Pulses des ersten Spiral-Puls-Generators.

8. Zündvorrichtung nach Anspruch 1, **dadurch gekennzeichnet, dass** der erste, Schwellwertschalter (3) eine Funkenstrecke ist.

9. Zündvorrichtung nach einem der vorhergehenden Ansprüche, **dadurch gekennzeichnet, dass** sie weiterhin einen Ladewiderstand (7) enthält.

10. Hochdruckentladungslampe mit einem Entladungsgefäß (5), das insbesondere in einem Außenkolben (51) untergebracht ist, aufweisend eine Zündvorrichtung nach einem der Ansprüche 1 bis 7, **dadurch gekennzeichnet, dass** eine Ladespannung (17) für die Zündvorrichtung die umgekehrte Polarität der Leerlaufspannung (13) eines Betriebsgerätes zum Betreiben der Hochdruckentladungslampe besitzt, diese Ladespannung (17) ebenfalls von dem Betriebsgerät bereitgestellt wird, und die Summe beider Spannungen an die Zündvorrichtung angelegt wird.

11. Hochdruckentladungslampe nach Anspruch 10, **dadurch gekennzeichnet, dass** die Zündvorrichtung oder ein Teil der Zündvorrichtung im Außenkolben der Hochdruckentladungslampe integriert ist.

## Claims

1. Ignition device having a first spiral pulse generator (1) and a first threshold value switch (3), which are arranged in an outer bulb or in the cap of a discharge gas lamp, **characterized in that** the voltage (U₀) applied to the lamp before ignition is increased by a second spiral pulse generator (11) with a second threshold value switch (31), in order then to apply the increased voltage to the first spiral pulse generator (1) so as to generate an ignition voltage.

2. Ignition device according to Claim 1, **characterized in that** the voltage multiplier cascade (30) consists of high-temperature stable components.

3. Ignition device according to Claim 2, **characterized in that** the voltage multiplier cascade (30) consists of SiC diodes and capacitors in LTCC design.

4. Ignition device according to Claim 3, **characterized in that** the capacitors are constructed from one or two LTCC stacks.

5. Ignition device according to Claim 4, **characterized in that** the SiC diodes are applied onto the LTCC stack or the LTCC stacks and connected to the capacitors by means of LTCC interconnections.

6. Ignition device according to Claim 1, **characterized in that** an arbitrarily biased diode is connected between the first spiral pulse generator (1) and the second spiral pulse generator (11), the blocking time of the diode being less than half the pulse width (t₁) of a pulse of the first spiral pulse generator.

7. Ignition device according to Claim 1, **characterized in that** an arbitrarily biased diode is connected between the first spiral pulse generator (1) and the second spiral pulse generator (11), the blocking time of the diode being less than one fourth of the pulse width (t₁) of a pulse of the first spiral pulse generator.

8. Ignition device according to Claim 1, **characterized in that** the first threshold value switch (3) is a spark gap.

9. Ignition device according to one of the preceding claims, **characterized in that** it furthermore contains a charging resistor (7).

10. High-pressure discharge lamp having a discharge vessel (5) which is fitted particularly in an outer bulb (51), having an ignition device according to one of Claims 1 to 7, **characterized in that** a charging voltage (17) for the ignition device has the opposite polarity to the open-circuit voltage (13) of an operating apparatus for operating a high-pressure discharge lamp, this charging voltage (17) is likewise provided by the operating apparatus, and the sum of the two voltages is applied to the ignition device.

11. High-pressure discharge lamp according to Claim 10, **characterized in that** the ignition device or part of the ignition device is integrated in the outer bulb of the high-pressure discharge lamp.

## Revendications

1. Dispositif d'amorçage comprenant un premier générateur d'impulsion en spirale (1) et un premier commutateur à seuil (3), lesquels sont disposés dans une ampoule extérieure ou dans le culot d'une lampe à décharge, **caractérisé en ce que** la tension (U₀) appliquée à la lampe avant l'amorçage est augmentée soit par une cascade multiplicatrice de tension (30), soit par un second générateur d'impulsion en spirale (11) avec un second commutateur à seuil (31), afin d'appliquer ensuite la tension augmentée au premier générateur d'impulsion en spirale (1).

2. Dispositif d'amorçage selon la revendication 1, **caractérisé en ce que** la cascade multiplicatrice de tension (30) est constituée de composants stables à haute température.

3. Dispositif d'amorçage selon la revendication 2, **caractérisé en ce que** la cascade multiplicatrice de tension (30) est constituée de diodes SiC et de condensateurs de type LTCC.

4. Dispositif d'amorçage selon la revendication 3, **caractérisé en ce que** les condensateurs sont constitués d'une ou deux piles LTCC.

5. Dispositif d'amorçage selon la revendication 4, **caractérisé en ce que** les diodes SiC sont placées sur la ou les piles LTCC et connectées aux condensateurs au moyen de pistes conductrices LTCC.

6. Dispositif d'amorçage selon la revendication 1, **caractérisé en ce qu'**une diode est montée selon une polarité quelconque entre le premier générateur d'impulsion en spirale (1) et le second générateur d'impulsion en spirale (11), le temps de blocage de la diode étant inférieur à la demi-largeur d'impulsion (t₁) d'une impulsion du premier générateur d'impulsion en spirale.

7. Dispositif d'amorçage selon la revendication 1, **caractérisé en ce qu'**une diode est montée selon une polarité quelconque entre le premier générateur d'impulsion en spirale (1) et le second générateur d'impulsion en spirale (11), le temps de blocage de la diode étant inférieur à un quart de la durée d'impulsion (t₁) d'une impulsion du premier générateur d'impulsion en spirale.

8. Dispositif d'amorçage selon la revendication 1, **caractérisé en ce que** le premier commutateur à seuil (3) est un éclateur.

9. Dispositif d'amorçage selon l'une des revendications précédentes, **caractérisé en ce qu'**il comporte en outre une résistance de charge (7).

10. Lampe à décharge haute pression comprenant un tube de décharge (5) logé en particulier dans une ampoule extérieure (51), et présentant un dispositif d'amorçage selon l'une des revendications 1 à 7, **caractérisée en ce qu'**une tension de charge pour le dispositif d'amorçage possède la polarité inverse de la tension à vide (13) d'un équipement destiné à faire fonctionner la lampe à décharge haute pression, **en ce que** cette tension de charge (17) est également fournie par l'équipement et **en ce que** la somme des deux tensions est appliquée au dispositif d'amorçage.

11. Lampe à décharge haute pression selon la revendication 10, **caractérisée en ce que** le dispositif d'amorçage, ou une partie du dispositif d'amorçage, est intégré dans l'ampoule extérieure de la lampe à décharge haute pression.
